# EUROPÄISCHE PATENTANMELDUNG

(11) **EP 3 403 867 A1**
(43) Veröffentlichungstag der Anmeldung: **21.11.2018**
(21) Anmeldenummer: 18158607.4
(22) Anmeldetag: 26.02.2018
(51) Int. Cl.: B60L 7/10, B25J 9/00, B60L 11/18, B60L 13/00, B60L 5/42, G05D 1/00, B60L 5/00

(54) **LADEPORTAL**

(30) Priorität: 08.05.2017 DE 102017109818
(71) Anmelder: Liebherr-Verzahntechnik GmbH, 87437 Kempten (DE)
(72) Erfinder: Hänschke, David, 87452 Altusried (DE); Porsche, Christof, 87600 Kaufbeuren (DE); Mattern, Thomas, 87669 Rieden (DE)
(74) Vertreter: Behr, Wolfgang

(57) **Zusammenfassung**

Die vorliegenden Erfindung zeigt ein Ladeportal mit mindestens einem an einer horizontalen Führungsschiene verfahrbaren Wagen, insbesondere zum Transport von Werkstücken zwischen Stationen eines Produktionssystems, wobei der Wagen mindestens einen Antrieb sowie einen Engergiespeicher zur zumindest teilweisen Energieversorgung des Antriebs aufweist.

## Beschreibung

Die vorliegende Erfindung betrifft ein Ladeportal mit mindestens einem an einer horizontalen Führungsschiene verfahrbaren Wagen. Solche Ladeportale dienen insbesondere zum Transport von Werkstücken zwischen Stationen eines Bearbeitungssystems wie Bearbeitungsmaschinen und/oder Zu- und/oder Abführeinrichtungen. Solche Ladeportale werden teilweise auch als Portalroboter oder Obertransfereinrichtung bezeichnet.

In der Serienfertigung von Werkstücken, insbesondere der mechanischen Bearbeitung von Werkstücken, werden die Werkstücke in der Regel nach einem genau geplanten Fertigungsablauf nacheinander mehreren Werkzeugmaschinen zugeführt. Dazu werden die Werkstücke zunächst über eine Zuführeinrichtung in das Produktionssystem eingeschleust und dann innerhalb des Produktionssystems von einer Bearbeitungsmaschine zur nächsten weitertransportiert. Je nach Anzahl der Fertigungsoperationen werden die Werkstücke entweder über eine Abführeinrichtung aus dem Produktionssystem ausgeschleust, oder über eine Zwischenautomation an ein weiteres Produktionssystem übergeben. Der Transport der Werkstücke von einer Station des Produktionssystems zur nächsten kann über ein Ladeportal erfolgen. In dem Produktionssystem können auch mehrere Ladeportale parallel oder in Serie arbeiten. Weiterhin können mehrere Wagen an dem Ladeportal vorgesehen sein.

Ladeportale arbeiten üblicherweise vollautomatisiert, wobei die Ansteuerung der Wagen über stationäre, zentral angeordnete Steuerungen erfolgt, welche den Betrieb der Wagen mit dem Betrieb der Bearbeitungsmaschinen und der Zu- und/oder Abführeinrichtung koordiniert.

Solche Ladeportale sind beispielsweise aus der 10 2012 011 534 A1, der DE 10 2013 014 266 A1 sowie der DE 10 2014 014 874 A1 bekannt. Ladeportale aus dem Stand der Technik weisen zur Versorgung des bzw. der Wagen mit Energie und Schmiermittel sowie zur Datenübertragung mit dem Wagen eine Versorgungskette mit entsprechenden Versorgungsleitungen auf. Versorgungsketten sind aufgrund der Bewegung des Wagens jedoch einem erheblichen Verschleiß ausgesetzt. Weiterhin ist eine nachträgliche Verlängerung des Ladeportals nur unter komplettem Austausch der Versorgungskette möglich. Zudem besteht ein Sicherheitsrisiko, da die Versorgungskette von ihrer Auflagefläche herunterfallen kann.

Aus der DE 10 2006 049 588 A1 ist ein Transportsystem mit einem Schienensystem und darauf bewegbar angeordneten Wagen gezeigt, wobei die Schienen ein Primärleitersystem umfassen, an das zumindest eine vom Wagen umfasste Sekundärspule induktiv gekoppelt ist zur berührungslosen Übertragung elektrischer Leistung und/oder Information. Hierdurch soll auf eine Versorgungskette verzichtet werden können, da die Energieversorgung oder die Kommunikation mit dem Wagen berührungslos erfolgt. Die Umsetzung der aus der DE 10 2006 049 588 A1 bekannten Lehre ist jedoch mit erheblichen Problemen verbunden, da die berührungslose Übertragung hoher elektrischer Leistungen, wie sie zum Betrieb eines Wagens notwendig ist, mit großen Schwierigkeiten verbunden ist.

Aufgabe der vorliegenden Erfindung ist es daher, ein verbessertes Ladeportal zur Verfügung zu stellen.

Diese Aufgabe wird durch ein Ladeportal gemäß Anspruch 1 gelöst. Bevorzugte Ausgestaltung der vorliegenden Erfindung ist Gegenstand der Unteransprüche.

Die vorliegende Erfindung umfasst ein Ladeportal mit mindestens einem an einer horizontalen Führungsschiene verfahrbaren Wagen, wobei der Wagen mindestens einen Antrieb aufweist. Erfindungsgemäß ist vorgesehen, dass der Wagen einen Energiespeicher zur zumindest teilweisen Energieversorgung des Antriebs aufweist. Durch den Energiespeicher ergeben sich erhebliche Vorteile im Hinblick auf die Auslegung der Energieversorgung und den Betrieb des Ladeportals.

Das erfindungsgemäße Ladeportal kann insbesondere zum Transport von Werkstücken zwischen Stationen eines Bearbeitungssystems wie Bearbeitungsmaschinen und/oder Zu- und/oder Abführeinrichtungen dienen. Insbesondere kann es dabei zu den Zwecken eingesetzt werden, welche oben im Hinblick auf den Stand der Technik näher erläutert wurden.

Bei dem Antrieb der vorliegenden Erfindung handelt es sich bevorzugt um einen elektrischen Antrieb. Bei dem Energiespeicher handelt es sich bevorzugt um einen elektrischen Energiespeicher. Beispielsweise können als Energiespeicher ein Kondensator, insbesondere ein Supercap, und/oder ein Akkumulator zum Einsatz kommen. Der Wagen kann dabei ausschließlich elektrische Antriebe aufweisen.

Bevorzugt weißt der Wagen weiterhin eine Energierückgewinnungseinrichtung zur Rückgewinnung von Energie aus der Bewegung des Wagens und/oder aus der Bewegung mindestens einer Komponente des Wagens auf, wobei die rückgewonnene Energie in dem Energiespeicher gespeichert wird. Hierdurch kann der Energieverbrauch des Ladeportals gesenkt werden.

Bevorzugt dient der Antrieb zur Umsetzung der Energierückgewinnung als ein Generator, wobei die Energierückgewinnungseinrichtung eine Steuerung aufweist, welche die von dem Antrieb erzeugte Energie in dem Energiespeicher speichert.

In einer ersten Variante erlaubt die Rückgewinnungseinrichtung die Rückgewinnung kinetischer Energie aus dem Abbremsprozess des Wagens und/oder mindestens einer Komponente des Wagens. Insbesondere kann eine Rückgewinnung kinetischer Energie aus der Bewegung des Wagens entlang der horizontalen Führungsschiene vorgesehen sein. Da der Wagen im Rahmen des Betriebs des Ladeportals häufig stoppt, kann der hierfür nötige Abbremsprozess zur Energierückgewinnung genutzt werden.

In einer zweiten Variante, welche mit der ersten kombiniert werden kann, erlaubt die Energierückgewinnungseinrichtung die Rückgewinnung potenzieller Energie aus der Bewegung einer Komponente des Wagens, welche zumindest in vertikaler Richtung bewegbar ist. Bevorzugt dient die Komponente zum Bewegen der Werkstücke in vertikaler Richtung und/oder trägt einen Greifer.

Das erfindungsgemäße Ladeportal dient bevorzugt zur Beschickung der Bearbeitungsmaschinen und/oder Zu- und/oder Abführeinrichtung der Produktionsstraße mit Werkstücken von oben. Hierfür weist der Wagen bevorzugt eine Komponente auf, welche zumindest auch in vertikaler Richtung bewegbar ist und zum Anheben oder Absenken der Werkstücke dient.

Gemäß der oben beschriebenen zweiten Variante kann die potenzielle Energie dieser Komponente und/oder des Werkstücks beim Absenken der Komponente rückgewonnen und in dem Energiespeicher gespeichert werden.

Das erfindungsgemäße Ladeportal kann eine Energieversorgungseinrichtung zur Versorgung des Wagens mit Energie aufweisen. Die Energieversorgungseinrichtung kann zum Laden des elektrischen Energiespeichers und/oder zur unmittelbaren Energieversorgung des mindestens einen Antriebs des Wagens dienen. Bevorzugt arbeitet die Energieversorgungseinrichtung berührungslos, insbesondere über Induktionen.

In einer ersten Ausführungsvariante der vorliegenden Erfindung kann die Energieversorgungseinrichtung den Wagen permanent und/oder in jeder Verfahrposition mit Energie versorgen. Insbesondere kann der erfindungsgemäße Energiespeicher in diesem Fall zur Unterstützung dieser Energieversorgungseinrichtung dienen, sodass die Energieversorgungseinrichtung selbst schwächer ausgelegt werden kann.

Bevorzugt erstreckt sich ein Energieversorgungsabschnitt der Energieversorgungseinrichtung bei dieser Variante über die gesamte Länge der Führungsschiene. Insbesondere kann die Energieversorgungseinrichtung eine oder mehrere Induktionsspulen aufweisen, welche sich über die gesamte Länge der Führungsschiene erstreckt oder in ihrer Gesamtheit erstrecken. Der Wagen kann einen Induktionsabnehmer aufweisen, welcher mit der oder den Induktionsspulen zusammenwirkt.

In einer zweiten Variante der vorliegenden Erfindung kann vorgesehen sein, dass die Energieversorgungseinrichtung den Wagen lediglich zeitweise oder nur in einzelnen Verfahrpositionen und/oder Verfahrabschnitten mit Energie versorgt. In diesem Fall dient die Energieversorgungseinrichtung insbesondere dem Laden des Energiespeichers.

Bei dieser Variante kann die Energieversorgungseinrichtung mehrere Energieversorgungsabschnitte aufweisen, welche an einzelnen Verfahrpositionen angeordnet sind oder sich entlang einzelner Verfahrabschnitte erstrecken, wobei zwischen diesen Verfahrpositionen und/oder Verfahrabschnitten Abschnitte ohne Energieversorgung vorgesehen sind. Bei den Energieversorgungsabschnitten handelt es sich bevorzugt jeweils um eine oder mehrere Induktionsspulen, welche weiter bevorzugt mit einem Induktionsabnehmer des Wagens zusammenwirken.

Die zweite Variante ermöglicht eine erheblich kostengünstigere Ausführung der Energieversorgungseinrichtung, da sich diese nicht mehr über die gesamte Länge der Führungsschiene erstrecken muss.

Bevorzugt versorgt die Energieversorgungseinrichtung den Wagen in mindestens einer Arbeitsposition, in welcher der Wagen über einer Station des Bearbeitungssystems wie einer Bearbeitungsmaschine und/oder Zu- und/oder Abführeinrichtung stoppt, um ein Werkstück abzulegen oder aufzunehmen, mit Energie. Insbesondere kann einer solchen Arbeitsposition ein Energieversorgungsabschnitt, beispielsweise eine Induktionsspule, zugeordnet werden, über welche der in der Arbeitsposition angeordnete Wagen mit Energie versorgt wird.

Da der Wagen an einer solchen Arbeitsposition eine Zeit lang verweilt, um das Werkstück abzulegen oder aufzunehmen, kann diese Zeit nunmehr genutzt werden, um den Energiespeicher zu laden.

Weiterhin liegt üblicherweise gerade an solchen Arbeitspositionen ein besonders hoher Leistungsverbrauch des Wagens vor, sodass es für die Auslegung von Vorteil ist, wenn der Wagen bzw. ein oder mehrere Antriebe des Wagen in einer solchen Position sowohl über den Energiespeicher, als auch über den Energieversorgungsabschnitt mit Energie versorgt werden. Hierdurch kann die Energieübertragungsleistung des Energieversorgungsabschnitts, aber ggf. auch die Speicherleistung des Energiespeichers, geringer ausgelegt werden.

Alternativ oder zusätzlich kann die Energieversorgungseinrichtung den Wagen in mindestens einer Parkposition mit Energie versorgen. Bevorzugt weist die Energieversorgungseinrichtung mindestens einen Energieversorgungsabschnitt auf, welcher der Parkposition zugeordnet ist. Bei dem Energieversorgungsabschnitt kann es sich insbesondere um eine Induktionsspule handeln.

Bevorzugt wird der Wagen von einer Steuerung des Ladeportals und/oder des Wagens zum Aufladen des Energiespeichers in die Parkposition verfahren. Dies kann beispielsweise in Abhängigkeit von einem Ladezustand des elektrischen Energiespeichers erfolgen, und/oder zu vorbestimmten Zeitpunkten im Ladezyklus.

In der Parkposition befindet sich der Wagen bevorzugt außerhalb des für den Transport der Werkstücke notwendigen Verfahrbereichs.

Gemäß einem ersten Aspekt der vorliegenden Erfindung kann der Energiespeicher zur Abdeckung von Verbrauchsspitzen dienen. Hierdurch kann die Energieversorgungseinrichtung so dimensioniert werden, dass die von der Energieversorgungseinrichtung zur Verfügung gestellte Spitzenleistung unterhalb des maximalen Leistungsverbrauchs des Wagens liegt. Eine solche Ausgestaltung ist sowohl von Vorteil, wenn die Energieversorgungseinrichtung den Wagen ständig und/oder in jeder Verfahrposition mit Energie versorgt, als auch dann, wenn die Energieversorgungseinrichtung den Wagen nur zeitweise und/oder in bestimmten Verfahrpositionen und/oder Verfahrabschnitten mit Energie versorgt.

In einem zweiten Aspekt der vorliegenden Erfindung kann der Wagen zumindest zeitweise ausschließlich über die Energie des Energiespeichers betreibbar sein. Dies erlaubt es, die Energieversorgungseinrichtung so auszulegen, dass der Wagen nicht mehr ständig und/oder nicht mehr an jeder Verfahrposition mit Energie versorgt wird. Durch den Energiespeicher wird der Wagen daher zumindest über einen Zeitraum unabhängig von der Energieversorgungseinrichtung.

Bevorzugt ist der Wagen über mindestens einen und weiter bevorzugt über mehrere Verfahrzyklen ausschließlich über die Energie des Energiespeichers betreibbar. Ein Verfahrzyklus umfasst bevorzugt ein Aufnehmen eines Werkstücks, ein horizontales Verfahren des Wagens, und ein Ablegen des Werkstücks.

Der Energiespeicher kann auch so ausgelegt sein, dass der Wagen über mehr als 30 Minuten, bevorzugt über mehr als eine Stunde ausschließlich über die Energie des Energiespeichers betreibbar ist.

In einer möglichen Ausführungsform der vorliegenden Erfindung ist der Energiespeicher auswechselbar. Insbesondere kann der Wagen so ausgeführt sein, dass ein entladener Energiespeicher durch einen geladenen Energiespeicher ausgetauscht werden kann. Bevorzugt kann der Austausch erfolgen, ohne dass der Wagen von der Führungsschiene mechanisch gelöst werden müsste.

Durch den Wechsel des Energiespeichers kann in einer möglichen Ausführungsform auf ein Aufladen des Energiespeichers über eine Energieversorgungseinrichtung des Ladeportals am Wagen verzichtet werden. GGf. kann dabei komplett auf Ladevorrichtungen verzichtet werden.

Alternativ kann die Auswechselbarkeit zusätzlich zur Wiederaufladbarkeit des Energiespeichers am Wagen gegeben sein.

Bevorzugt weist das Ladeportal eine Wechselstation zum manuellen und/oder automatischen Auswechseln des Energiespeichers auf. Die Wechselstation ermöglicht bevorzugt einen Zugang zum Wagen für ein manuelles Wechseln und/oder weist eine Automation auf, welche den Engergiespeicher aus dem Wagen entnimmt und durch einen anderen Engergiespeicher ersetzt. Bevorzugt weist die Wechselstation eine Ladevorrichtung zum Aufladen eines oder mehrerer Engergiespeicher auf. Bevorzugt ist die Wechselstation im Bereich der Führungsschiene angeordnet und/oder kann vom Wagen durch Verfahren in eine Wechselposition entlang der Führungsschiene angefahren werden.

Bevorzugt überwacht die Steuerung des Wagens und/oder Ladeportals den Ladezustand des Energiespeichers und gibt eine Anzeige und/oder Steuersignal aus, wenn der Ladezustand unter einen vorgegebenen Grenzwert fällt. Bevorzugt erfolgt auf das Steuersignal hin ein automatisches Anfahren der Wechselstation und/oder ein automatischer Austausch des Energiespeichers.

Das erfindungsgemäße Ladeportal umfasst bevorzugt ein kabelloses Datenübertragungssystem zur Kommunikation mit dem Wagen. Das Datenübertragungssystem kann insbesondere zur Kommunikation mit einer Steuerung und/oder Sensoren des Wagens dienen. Insbesondere kann das Datenübertragungssystem eine Kommunikation zwischen einer Steuerung des Ladeportals und einer Steuerung und/oder Sensoren des Wagens ermöglichen.

In einer ersten Variante umfasst das Datenübertragungssystem einen geschlitzten Hohlleiter, welcher sich entlang der Führungsschiene erstreckt und mit einer am Wagen angeordneten Antenne zusammenwirkt. Die am Wagen angeordnete Antenne erstreckt sich bevorzugt über den Schlitz in den Hohlleiter hinein.

In einer zweiten Variante, welche mit der ersten Variante kombiniert werden kann, erlaubt das kabellose Datenübertragungssystem eine Kommunikation mit dem Wagen in jeder Verfahrposition des Wagens.

In einer dritten Variante ist dagegen vorgesehen, dass das kabellose Kommunikationssystem nur in einzelnen Verfahrpositionen und/oder Verfahrabschnitten eine Kommunikation mit dem Wagen erlaubt. Je nach den steuerungstechnischen Anforderungen kann eine solche zeitweilige Datenübertragung ausreichen.

Bevorzugt ist in diesem Fall eine Kommunikation in einer Arbeitsposition, in welcher der Wagen über einer Station des Bearbeitungssystems wie einer Bearbeitungsmaschine und/oder Zu- und/oder Abführeinrichtung stoppt, um ein Werkstück abzulegen oder aufzunehmen, und/oder in einer Parkposition möglich. Bevorzugt sind in diesen Positionen hierfür entsprechende Kommunikationselemente vorgesehen. Insbesondere kann es sich bei der dritten Variante dabei um eine Point-to-point Kommunikation handeln, wie beispielsweise industrielles Bluetooth.

Das Ladeportal kann auch mehrere parallele Datenübertragungssysteme gemäß einer oder mehreren der oben beschriebenen Varianten aufweisen.

Weiterhin bevorzugt ist das Datenübertragungssystem oder sind die Datenübertragungssysteme redundant ausgelegt.

Bevorzugt weist der Wagen eine Steuerung für den mindestens einen Antrieb auf. Insbesondere kann die Leistungselektronik zur Ansteuerung des Antriebs im Wagen angeordnet sein.

Bevorzugt erhält die Steuerung des Wagens von einer Steuerung des Ladeportals Befehle und/oder Synchronisierungsdaten zur Ansteuerung des Antriebs. Alternativ oder zusätzlich kann die Steuerung Zustandsdaten des Wagens an eine Steuerung des Ladeportals senden.

In einer ersten Variante kann die Regelung des Antriebs über die Steuerung des Ladeportals erfolgen. In diesem Fall überträgt die Steuerung des Wagens bevorzugt Positions- und/oder Geschwindigkeitsdaten an die Steuerung des Ladeportals, welche diese mit Sollpositions- und Sollgeschwindigkeitswerten abgleicht und entsprechende Steuerbefehle zur Ansteuerung des Antriebs an die Steuerung des Wagens überträgt.

Die erste Variante, bei welcher die Regelung des Antriebs über die Steuerung des Ladeportals erfolgt, wird bevorzugt mit einem Kommunikationssystem eingesetzt, welches eine ständige Kommunikation mit dem Wagen erlaubt.

In einer zweiten Variante kann die Regelung des Antriebs über die Steuerung des Wagens erfolgen. In diesem Fall wertet die Steuerung des Wagens die Positions- und/oder Geschwindigkeitsdaten selbst aus und vergleicht diese mit Sollwerten, um den Antrieb entsprechend anzusteuern. Bevorzugt übermittelt die Steuerung des Ladeportals die Sollwerte an die Steuerung des Wagens.

Erfolgt die Regelung des Antriebs über die Steuerung des Wagens, kann auch ein Kommunikationssystem eingesetzt werden, welches eine nur zeitweise Kommunikation mit dem Wagen vorsieht.

Bevorzugt werden über das Kommunikationssystem in diesem Fall lediglich Sollwerte für die Position und/oder Geschwindigkeit der mit dem Antrieb angetriebenen Komponente übertragen oder solche Sollwerte sind in einem Speicher der Steuerung des Wagens abgelegt, sodass über das Kommunikationssystem lediglich eine Synchronisierung mit den übrigen Elementen des Produktionssystems aufrechterhalten werden muss.

Bevorzugt werden entweder sämtliche Antriebe des Wagens über die Steuerung des Wagens geregelt, oder sämtliche Antriebe des Wagens über die Steuerung des Ladeportals.

Denkbar sind auch gemischte Systeme, welchen die Regelung mindestens eines Antriebs des Wagens über die Steuerung des Wagens, und die Regelung mindestens eines anderen Antriebs über die Steuerung des Ladeportals erfolgt.

Bevorzugt weist der Wagen ein autonomes Schmiersystem mit einem Schmierstoffbehälter zur Versorgung mindestens einer mechanischen Achse und/oder mindestens eines Antriebs mit Schmierstoff auf. Hierdurch kann auch auf eine Schmierstoffzuführung zum Wagen verzichtet werden.

Bevorzugt erfolgt der Antrieb des Wagens entlang der Führungsschiene über ein Antriebselement des Wagens, welches mit einer Zahnstange der Führungsschiene kämmt. Hierdurch ist die Position des Wagens an der Führungsschiene über die Position des Antriebselementes eindeutig bestimmt. Bei dem Antriebselement kann es sich um ein Ritzel oder eine Schnecke handeln.

Der Wagen kann eine Komponente aufweisen, welche zumindest auch in vertikaler Richtung bewegbar ist. Bevorzugt dient die Komponente zum Bewegen der Werkstücke in vertikaler Richtung. Die Komponente kann einen Greifer zum Greifen der Werkstücke tragen.

Die Komponente kann in einer ersten Ausführungsform eine vertikal bewegbare Linearachse aufweisen. Beispielsweise kann eine vertikal bewegbare Zahnstange eingesetzt werden, welche über einen Antrieb des Wagens vertikal verfahren werden kann. In einer zweiten Ausführungsform kann ein Roboterarm mit mehreren Schwenk- und/oder Rotationsachsen eingesetzt werden. Beispielsweise kann ein 6-Achs-Industrieroboter am Wagen angeordnet werden. Weiterhin ist auch eine Kombination aus Linearachsen und Schwenk- und/oder Rotationsachsen denkbar.

Das erfindungsgemäße Portal kann in einer ersten Variante als ein Linearportal ausgeführt sein, in einer zweiten Variante als ein Flächenportal.

Die Führungsschiene wird bevorzugt über eine oder mehrere Stützen getragen und erstreckt sich bevorzugt oberhalb der Bearbeitungsmaschinen und/oder Zu- und/oder Abführeinrichtungen des Produktionssystems. Handelt es sich um ein Linearportal, so sind die Stützen bevorzugt stationär, wobei die Führungsschiene fest an den Stützen angeordnet ist. Handelt es sich um ein Flächenportal, sind entweder die Stützen verfahrbar, oder die Führungsschiene an den Stützen.

Das Ladeportal ist bevorzugt so ausgestaltet, dass es die Werkstücke unmittelbar greift, oder dass es Paletten und/oder Werkstückhalter, welche die Werkstücke tragen, greift.

Das erfindungsgemäße Ladeportal kann zwei oder mehrere Wagen aufweisen, welche entlang derselben Führungsschiene bewegbar sind.

Da keine Energieversorgungskette mehr notwendig ist, kann das Ladeportal flexibel mit einer Mehrzahl von Wagen ausgerüstet werden. Hierdurch ist insbesondere eine flexible Anpassung an sich ändernde Produktionsabläufe möglich, ohne dass ein größerer konstruktiver Aufwand betrieben werden müsste. Weiterhin können die Wagen auch zu Wartungszwecken problemlos und ohne großen Aufwand ausgetauscht werden.

Die erfindungsgemäße Ausgestaltung des Ladeportals hat den weiteren Vorteil, dass das Ladeportal problemlos verlängert werden kann, um dieses an einen sich ändernden Produktionsprozess oder neue Kundenanforderungen anzupassen.

Hierfür muss lediglich die Führungsschiene entsprechend verlängert werden, und ggf. die Energieversorgungs- und/oder Datenübertragungsabschnitte verlängert oder um neue Abschnitte ergänzt werden.

Die vorliegende Erfindung wird nun anhand von Ausführungsbeispielen sowie Zeichnungen näher beschrieben. Dabei zeigen
- Figur 1:: den Grundaufbau der Ausführungsbeispiele eines erfindungsgemäßen Ladeportals in einer perspektivischen Ansicht;
- Figur 2:: ein erstes spezifisches Ausführungsbeispiel eines erfindungsgemäßen Ladeportals in einer Seitenansicht;
- Figur 3:: ein zweites spezifisches Ausführungsbeispiel eines erfindungsgemäßen Ladeportals in einer Seitenansicht;
- Figur 4:: das in Figur 3 gezeigte zweite Ausführungsbeispiel in einer Frontalansicht entlang der Erstreckung der Führungsschiene und
- Figur 5:: ein drittes spezifisches Ausführungsbeispiel eines erfindungsgemäßen Ladeportals in einer Seitenansicht.

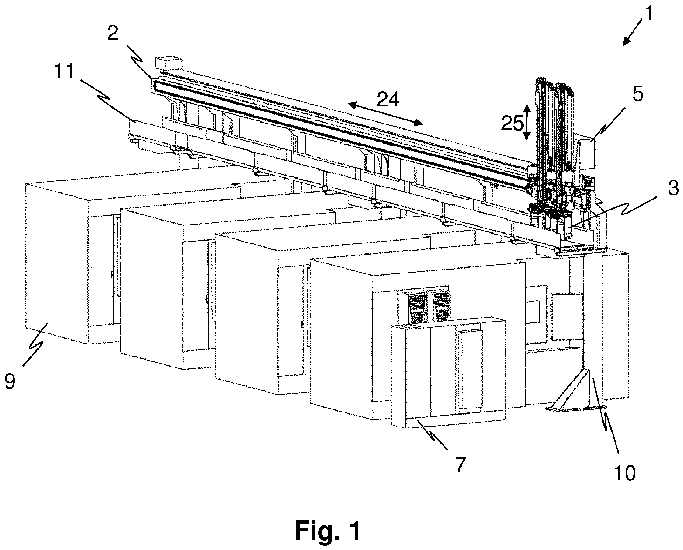

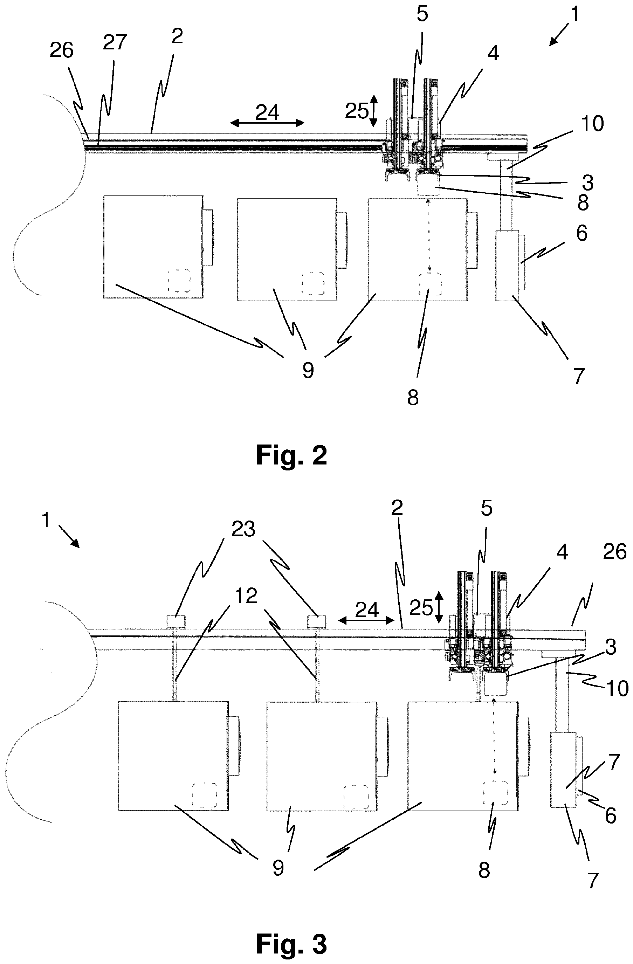

Fig. 1 zeigt den grundlegenden Aufbau der Ausführungsbeispiele des erfindungsgemäßen Ladeportals. Die folgenden Erläuterungen gelten daher in gleicher Weise auch für die in Fig. 2 bis 5 gezeigten spezifischen Ausführungsbeispiele.

Das Ausführungsbeispiel des Ladeportals weist eine horizontal verlaufende Führungsschiene 2 auf, an welcher ein Wagen 1 verfahrbar ist. Die Führungsschiene 2 wird von einer Abstützung 10 getragen, und erstreckt sich über eine Mehrzahl von Stationen 9 eines Bearbeitungssystems hinweg.

Bei den Stationen 9 des Bearbeitungssystems kann es sich um Werkzeugmaschinen handeln und/oder eine Zuführeinrichtung und/oder Abführeinrichtung für Werkstücke.

An dem Wagen 1 ist mindestens eine vertikal verfahrbare Komponente 25 vorgesehen, welche mindestens einen Greifer 3 trägt. Über diese Komponente können Werkstücke aus einer Station des Bearbeitungssystems von oben entnommen, durch Verfahren des Wagens 1 entlang der Führungsschiene 2 zur nächsten Station verfahren, und dort wiederrum von oben der Station zugeführt werden. Der oder die Greifer 3 können entweder unmittelbar ein oder mehrere Werkstücke greifen, oder einen Werkstückhalter wie beispielsweise eine Palette.

Der Wagen 1 weist mindestens einen Antrieb auf, über welchen der Wagen entlang der Führungsschiene 2 verfahrbar ist. Im Ausführungsbeispiel weist die Führungsschiene 2 eine Zahnstange auf, welche mit einem Antriebselement des Wagens 1 kämmt. Bei dem Antriebselement kann es sich beispielsweise um ein Ritzel und/oder um eine Schnecke handeln. Das Antriebselement wird von dem mindestens einen Antrieb des Wagens angetrieben.

Weiterhin weist der Wagen mindestens einen Antrieb auf, über welchen die vertikal verfahrbare Komponente 25 verfahrbar ist.

Der Wagen 1 weist üblicherweise noch weitere Antriebe auf, insbesondere zum Betätigen des Greifers 3 und/oder zum Bewegen des Greifers 3 relativ zum Wagen und/oder der vertikal verfahrbaren Komponente 25.

Im Ausführungsbeispiel wird die vertikal verfahrbare Komponente 25 durch eine Linearachse gebildet, welche einen Antrieb aufweist, über welche sie vertikal verfahren werden kann. Beispielsweise kann eine Zahnstange vorgesehen sein, welche mit einem Antriebselement des Wagens kämmt und hierdurch vertikal am Wagen verfahrbar ist.

Bei dem in Fig. 1 gezeigten Ausführungsbeispiel ist der Wagen 1 als sogenannte H-Konfiguration ausgeführt, bei welcher zwei vertikale Linearachsen 25 miteinander gekoppelt sind und parallel verfahren werden. Eine solche Ausgestaltung ist insbesondere zum Transport von langen Werkstücken von Vorteil.

Alternativ kann als vertikal verfahrbare Komponente auch ein Roboterarm mit mehreren Schwenk- und/oder Rotationsachsen eingesetzt werden. Beispielsweise kann an dem Wagen ein Sechs-Achs-Industrieroboter angeordnet werden, bspw. hängend oder seitlich am Wagen.

Im Ausführungsbeispiel weist das Ladeportal weiterhin eine Sicherheits- und/oder Ölwanne 11 auf, welche unterhalb des Wagens 1 angeordnet ist. Die Sicherheits- und/oder Ölwanne 11 erstreckt sich entlang des Verfahrweges der Werkstücke, und weist im Bereich der Stationen 9 des Bearbeitungssystems Öffnungen auf, über welche die Werkstücke aus der jeweiligen Station entnommen bzw. der jeweiligen Stationen übergeben werden können. Hierdurch werden die anderen Bereiche des Bearbeitungssystems von herunterfallenden Werkstücken und/oder von herabtropfendem Öl geschützt. Eine solche Sicherheits- und/oder Ölwanne ist lediglich optional.

Das Ladeportal und/oder Bearbeitungssystem weist einen Schaltschrank 7 auf, in welchem die Steuerung 6 für das Ladeportal angeordnet ist. Die Steuerung des Ladeportals erlaubt bevorzugt eine synchrone Ansteuerung des Ladeportals und der Stationen des Bearbeitungssystems.

Erfindungsgemäß weist der Wagen 1 einen Energiespeicher 5 auf, welcher zur Energieversorgung mindestens eines Antriebs des Wagens dient. Der Energiespeicher kann entweder zur Unterstützung einer Energieversorgung des Wagens dienen, oder so ausgelegt sein, dass der Wagen zumindest zeitweise komplett über den Energiespeicher mit Energie versorgt wird.

Bei dem Ausführungsbeispiel ist die lediglich schematisch dargestellte Steuerung 4 des Wagens 1 so ausgelegt, dass eine Energierückgewinnung aus der Bewegung des Wagens bzw. aus der Bewegung einer Komponente des Wagens möglich ist. Die rückgewonnene Energie wird dann in dem Energiespeicher 5 gespeichert und steht somit zum Betrieb des Wagens wieder zur Verfügung.

Zum einen kann hierbei Bremsenergie, welche beim Abbremsen des Wagens und/oder von Komponenten des Wagens gewonnen wird, gespeichert werden. Alternativ oder zusätzlich kann auch die potentielle Energie, welche beim Absenken einer Komponente des Wagens in vertikaler Richtung frei wird, rückgewonnen und gespeichert werden. Insbesondere kann die beim Absenken der vertikal verfahrbaren Komponente 25 freiwerdende Energie rückgewonnen und gespeichert werden.

Bevorzugt dient der Antrieb des Wagens bzw. der Komponente gleichzeitig als Generator, und kann daher je nach Betriebsphase zum Antrieb oder zur Energierückgewinnung eingesetzt werden. Insbesondere kann die Steuerung 4 des Wagens entsprechend ausgelegt sein.

Bei dem Antrieb handelt es sich im Ausführungsbeispiel um einen elektrischen Antrieb. Bei dem Energiespeicher handelt es sich um einen elektrischen Energiespeicher. Insbesondere kann dabei ein Supercap und/oder ein Akkumulator als elektrischer Energiespeicher eingesetzt werden. Bei dem elektrischen Antrieb kann es sich um einen Elektromotor und/oder um eine elektrische Linearachse handeln. Bevorzugt erfolgt der Antrieb des Wagens und aller seiner Komponenten elektrisch. Hierdurch kann bevorzugt komplett auf Hydraulik- und/oder Pneumatik-Aggregate verzichtet werden.

Der Wagen 1 ist im Ausführungsbeispiel weiterhin mit einem eigenen Schmiermittelsystem ausgestattet, welches einen Schmiermitteltank umfasst. Hierdurch bedarf es keiner externen Schmiermittelzuführungsleitungen mehr.

Das Ladeportal weist im Ausführungsbeispiel weiterhin eine berührungslos arbeitende Energieversorgung für den Wagen auf. Die Energieversorgung kann zum Laden des Energiespeichers 5 und/oder zur Energieversorgung eines oder mehrerer Antriebe des Wagens eingesetzt werden. Bevorzugt beruht die berührungslos arbeitende Energieversorgung auf dem Prinzip der Induktion. Insbesondere kann das Ladeportal eine oder mehrere Induktionsspulen aufweisen, welche mit einem oder mehreren Induktionsabnehmern am Wagen zusammenwirken, um den Wagen mit Energie zu versorgen.

Der Einsatz einer berührungslosen Energieversorgung hat den Vorteil, dass auf die bisher notwendige Versorgungskette zur Versorgung des Wagens 1 verzichtet werden kann. Hierdurch wird eine erheblich höhere Flexibilität bei der Auslegung und insbesondere bei der Erweiterung des Ladeportals erreicht. Weiterhin handelt es sich bei der Versorgungskette um einen Verschleißteil, auf welches nunmehr verzichtet werden kann.

Der Energiespeicher 5 des Wagens hat den Vorteil, dass die Energieversorgung des Ladeportals nicht mehr dafür ausgelegt werden muss, um auch Verbrauchsspitzen beim Betrieb des Wagens abdecken zu können, da der Energiespeicher 5 zumindest solche Verbrauchsspitzen abfängt. Dies macht den Einsatz einer berührungslosen Energieversorgung erst praktikabel, da die Energieversorgung nicht auf Spitzenbelastungen ausgelegt werden muss.

Weiterhin erlaubt die erfindungsgemäße Lösung prinzipiell den Einsatz beliebig vieler Wagen an einem Ladeportal, d.h. an einer Führungsschiene, da nicht mehr entsprechend viele Versorgungsketten vorgesehen werden müssen. Zudem können einzelne Wagen beispielsweise zur Wartung problemlos abgenommen und ausgetauscht werden. Hierzu muss lediglich noch die mechanische Verbindung mit der Führungsschiene 2 gelöst werden bzw. wieder hergestellt werden.

Die Steuerung 4 des Wagens 1 umfasst bevorzugt zumindest die Leistungselektronik für einen oder mehrere Antriebe des Wagens 1.

In einer ersten Variante wird die am Wagen angeordnete Leistungselektronik über die Steuerung 6 des Ladeportals angesteuert. In diesem Fall erfolgt bevorzugt eine Übertragung von Positions- und/oder Geschwindigkeitsdaten von dem Wagen zur Steuerung 6 des Ladeportals, so dass die Positions- und/oder Geschwindigkeitsregelung in der Steuerung 6 des Ladeportals erfolgt.

In einer zweiten Variante kann die Geschwindigkeits- und/oder Positionsregelung durch die Steuerung 4 des Wagens selbst erfolgen. Die Steuerung 4 kann hierbei Positions- und/oder Geschwindigkeitsdaten auswerten und mit einem Sollwert vergleichen, um den oder die Antriebe auf den Sollwert zu regeln.

Die Sollwerte können von der Steuerung 6 des Ladeportals zur Steuerung des Wagens übertragen werden, oder bereits in der Steuerung des Wagens abgelegt sein.

Die Kommunikation zwischen dem Wagen und der Steuerung 6 des Ladeportals erfolgt im Ausführungsbeispiel ebenfalls berührungslos.

Unterschiedliche Varianten der Energieversorgung des Wagens und der Kommunikation zwischen dem Wagen und der Steuerung 6 des Ladeportals werden im Folgenden anhand der spezifischen Ausführungsbeispiele in Fig. 2 bis 4 näher beschrieben.

In einem ersten Ausführungsbeispiel der vorliegenden Erfindung, welches in Fig. 2 näher dargestellt ist, wird der Wagen 1 in jeder Verfahrposition über die Energieversorgung des Ladeportals mit Energie versorgt. Hierfür ist eine Induktionsschiene 26 vorgesehen, welche sich über den gesamten Verfahrweg des Wagens entlang der Führungsschiene 2 erstreckt. Die Induktionsschiene 27 kann an der Führungsschiene 2 angeordnet sein, oder an einer separaten Tragschiene. Die Induktionsschiene umfasst mindestens eine Induktionsschleife, welche mit einem Induktionsabnehmer des Wagens zusammen wirkt.

In diesem Ausführungsbeispiel dient der Energiespeicher 5 des Wagens bevorzugt zur Abfederung von Leistungsspitzen, und daher zur Ergänzung der ständig vorhandenen Energieversorgung durch das Ladeportal.

Das in Fig. 2 gezeigte erste Ausführungsbeispiel umfasst weiterhin ein kabelloses Datenübertragungssystem, welches in jeder Verfahrposition des Wagens eine Datenübertragungsverbindung zwischen dem Wagen und der Steuerung 6 des Ladeportals bereit stellt. Insbesondere kann eine Datenübertragungsschiene 26 vorgesehen sein, welche sich über die gesamte Länge der Führungsschiene 2 erstreckt und mit einer Antenne am Wagen 1 zusammenwirkt. Auch die Datenübertragungsschiene 26 kann an der Führungsschiene 2 angeordnet sein, oder über eine separate Tragschiene getragen werden.

Beispielsweise kann als Datenübertragungsschiene 26 ein geschlitzter Hohlleiter eingesetzt werden, wobei die Antenne des Wagens über den Schlitz in den Hohlleiter hineinreicht. Hierdurch ist in jeder Verfahrposition eine sichere Datenübertragung gewährleistet. Weiterhin kann eine solche Datenübertragungsstrecke auch redundant ausgeführt werden, indem unterschiedliche Moden des Hohlleiters zur Datenübertragung eingesetzt werden.

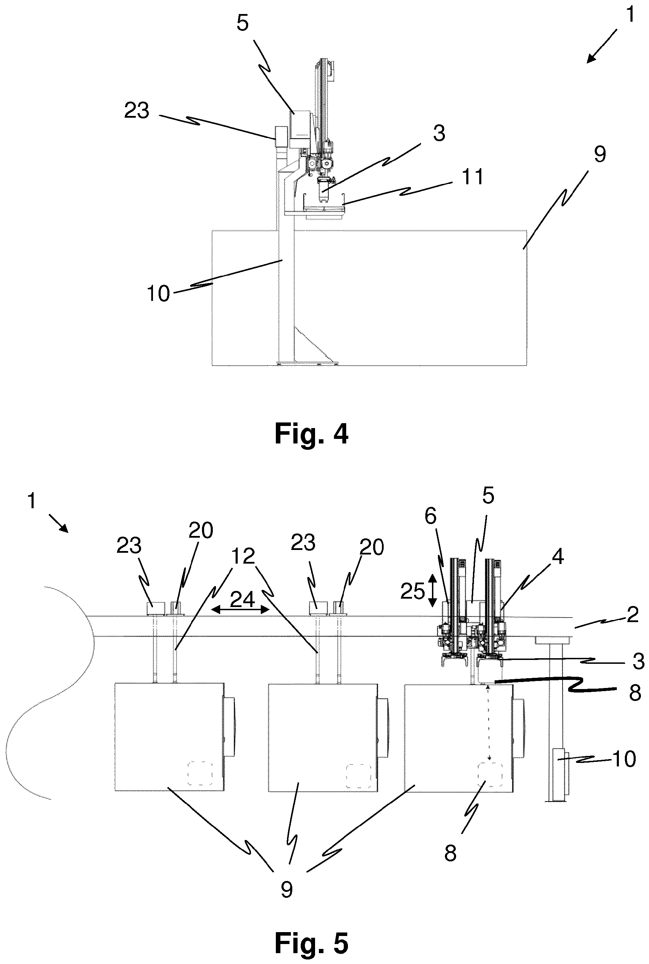

Bei dem in Fig. 3 und 4 gezeigten zweiten Ausführungsbeispiel ist das gleiche Datenübertragungssystem vorgesehen wie bei dem in Fig. 2 gezeigten ersten Ausführungsbeispiel.

Eine Energieversorgung des Wagens ist bei dem in Fig. 3 und 4 gezeigten zweiten Ausführungsbeispiel dagegen nur noch in bestimmten Verfahrpositionen und/oder Verfahrabschnitten vorgesehen. Hierfür werden Ladeeinheiten 23 eingesetzt, welche an bestimmten Verfahrpositionen und/oder in bestimmten Verfahrabschnitten eine Energieversorgung des Wagens 1 erlauben. Die Ladeeinheiten umfassen bevorzugt eine oder mehrere Induktionsspulen, welche mit einem oder mehreren Induktionsabnehmern des Wagens zusammen wirken. Sie erstrecken sich jedoch anders als beim dem in Fig. 2 gezeigten Ausführungsbeispiel nicht mehr entlang des gesamten Verfahrwegs des Wagens, sondern sind dort nur punktuell und/oder abschnittsweise vorgesehen.

Wie aus Fig. 3 und 4 ersichtlich, sind die Ladeeinheiten 23 im Ausführungsbeispiel jeweils in einer Arbeitsposition des Wagens 1 oberhalb einer Station 9 des Produktionssystems vorgesehen. In solchen Arbeitspositionen stoppt der Wagen, um Werkstücke 8 aufzunehmen oder abzulegen. Während dieser Verweilzeit kann die Ladeeinheit 23 genutzt werden, um den Energiespeicher 5 des Wagens aufzuladen. Dieser ist so dimensioniert, dass er ein Verfahren des Wagens zumindest von einer Station zur nächsten Station ohne externe Energieversorgung erlaubt.

Die Anordnung der Ladeeinheiten in den Arbeitspositionen hat den weiteren Vorteil, dass hier Energie für das Anheben des Werkstücks benötigt wird, sowie für das Beschleunigen des Wagens aus dem Stand, so dass die Ladeeinheit zusätzlich zur Unterstützung des Energiespeichers eingesetzt werden kann.

Die Ladeeinheiten können in einer ersten, nicht dargestellten Variante an der Führungsschiene 2 mechanisch befestigt und/oder über eine entlang der Führungsschiene 2 verlaufende Leitung mit Strom versorgt werden.

Bei der in Fig. 3 und 4 gezeigten Variante werden die Ladeeinheiten 23 dagegen elektrisch über die jeweilige Station 9 mit Strom versorgt. Weiterhin erfolgt auch die mechanische Anordnung der Ladeeinheiten 23 jeweils an einer separaten Halterung 12, welche am Boden oder der jeweiligen Station 9 befestigt ist und die Ladeeinheit 23 trägt. Alternativ kann die mechanische Anordnung jedoch auch hier an der Führungsschiene 2 erfolgen.

Bei dem in Fig. 5 gezeigten dritten Ausführungsbeispiel erfolgt auch die Datenübertragung lediglich punktuell bzw. abschnittsweise. Hierfür ist mindestens eine Datenübertragungseinheit 20 vorgesehen, welche in einer bestimmten Verfahrpositionen und/oder einem bestimmten Verfahrabschnitt eine Kommunikation mit dem Wagen erlaubt. Hierbei handelt es sich bevorzugt um einen point-to-point signal exchange, wie beispielsweise industrielles Bluetooth.

Im Ausführungsbeispiel sind die Datenübertragungseinheiten jeweils in einer Arbeitsposition des Wagens 1 oberhalb einer Station 9 des Produktionssystems angeordnet. Weiterhin sind die Datenübertragungseinheiten 20 im Ausführungsbeispiel über eine Halterung 12 mechanisch gehalten und elektrisch an eine Station 9 gekoppelt. Für die Datenübertragungseinheiten 20 können die gleichen Ausgestaltungen und Alternativen für die mechanische und elektrische Anbindung eingesetzt werden wie für die oben beschriebenen Ladeeinheiten 23 gemäß dem Ausführungsbeispiel in Fig. 3 und 4.

Soll eine nur punktuelle Datenübertragung eingesetzt werden, sollte bevorzugt eine Steuerung 4 des Wagens 1 zum Einsatz kommen, welche ein zumindest zeitweise autonomes Verfahren des Wagens ermöglicht. Bevorzugt weist die Steuerung 4 des Wagens zumindest eine eigene Positions- und/oder Geschwindigkeitsregelung für den Wagen und/oder dessen Komponenten auf.

Im Ausführungsbeispiel ist das Ladeportal als ein Linearportal ausgeführt, so dass die Führungsschiene 2 über die Abstützung 10 stationär am Boden angeordnet ist.

Die vorliegende Erfindung kann in gleicher Weise auch an einem Flächenportal eingesetzt werden, bei welchem die Führungsschiene 2 senkrecht zu ihrer Erstreckung horizontal verfahren werden kann. Dies kann entweder über eine verfahrbare Abstützung 10 erfolgen, oder indem die Führungsschiene 2 an der Abstützung 10 verfahrbar angeordnet ist.

### Bezugszeichenliste:

- 1: Wagen
- 2: Führungsschiene
- 3: Greifer
- 4: Steuerung des Wagens
- 5: Energiespeicher
- 6: Steuerung des Ladeportals
- 7: Schaltschrank
- 8: Werkstück
- 9: Werkzeugmaschine
- 10: Abstützung
- 11: Sicherheits- / Ölwanne
- 12: Stromversorgung der Ladeeinheit an der Führungsbahn

- 20: Datenübertragungseinheit (point to point signal exchange)
- 23: Ladeeinheit (berührungslos vorzugsweise Induktiv)
- 24: X-Achse (Bewegungsrichtung Wagen an der Führungsschiene)
- 25: Z-Achse (Bewegungsrichtung vertikal)
- 26: Datenübertragungsschiene (kabellose Signalübertragung)
- 27: Induktionsschiene

## Patentansprüche

1. Ladeportal mit mindestens einem an einer horizontalen Führungsschiene verfahrbaren Wagen, insbesondere zum Transport von Werkstücken zwischen Stationen eines Produktionssystems, wobei der Wagen mindestens einen Antrieb aufweist,
**dadurch gekennzeichnet,**
**dass** der Wagen einen Engergiespeicher zur zumindest teilweisen Energieversorgung des Antriebs aufweist.

2. Ladeportal nach Anspruch 1, wobei der Wagen eine Energierückgewinnungseinrichtung zur Rückgewinnung von Energie aus der Bewegung des Wagens und/oder aus der Bewegung mindestens einer Komponente des Wagens aufweist, wobei die rückgewonnene Energie in dem Engergiespeicher gespeichert wird.

3. Ladeportal nach Anspruch 2, wobei die Energierückgewinnungseinrichtung die Rückgewinnung kinetischer Energie aus einem Abbremsprozess des Wagens und/oder der mindestens einen Komponente des Wagens erlaubt, insbesondere eine Rückgewinnung kinetischer Energie aus der Bewegung des Wagens entlang der horizontalen Führungsschiene, und/oder die Rückgewinnung potentieller Energie aus der Bewegung einer Komponente des Wagens, welche zumindest auch in vertikaler Richtung bewegbar ist, wobei die Komponente bevorzugt zum Bewegen der Werkstücke in vertikaler Richtung dient und/oder einen Greifer trägt.

4. Ladeportal nach einem der vorangegangenen Ansprüche, wobei das Ladeportal eine Energieversorgungseinrichtung zur Versorgung des Wagens mit Energie aufweist, wobei die Energieversorgungseinrichtung bevorzugt berührungslos arbeitet, insbesondere über Induktion.

5. Ladeportal nach Anspruch 4, wobei die Energieversorgungseinrichtung den Wagen permanent und/oder in jeder Verfahrposition mit Energie versorgt, wobei sich bevorzugt ein Energieversorgungsabschnitt der Energieversorgungseinrichtung über die gesamte Länge der Führungsschiene erstreckt, wobei die Energieversorgungseinrichtung bevorzugt eine oder mehrere Induktionsspulen aufweist, welche sich über die gesamte Länge der Führungsschiene erstreckt oder erstrecken.

6. Ladeportal nach Anspruch 4, wobei die Energieversorgungseinrichtung den Wagen lediglich zeitweise und/oder nur in einzelnen Verfahrpositionen und/oder Verfahrabschnitten mit Energie versorgt, wobei die Energieversorgungseinrichtung bevorzugt mehrere Energieversorgungsabschnitte, insbesondere Induktionsspulen, aufweist, welche an einzelnen Verfahrpositionen angeordnet sind und/oder sich entlang einzelner Verfahrabschnitte erstrecken.

7. Ladeportal nach Anspruch 6, wobei die Energieversorgungseinrichtung den Wagen in mindestens einer Arbeitsposition mit Energie versorgt, in welcher der Wagen über einer Station des Bearbeitungssystems stoppt, um ein Werkstück abzulegen oder aufzunehmen, wobei der Arbeitsposition bevorzugt ein Energieversorgungsabschnitt, insbesondere eine Induktionsspule, zugeordnet ist, und/oder wobei die Energieversorgungseinrichtung den Wagen in mindestens einer Parkposition mit Energie versorgt, wobei die Energieversorgungseinrichtung bevorzugt mindestens einen Energieversorgungsabschnitt aufweist, welcher der Parkposition zugeordnet ist, wobei der Wagen bevorzugt von einer Steuerung des Ladeportals und/oder Wagens zum Aufladen des Energiespeichers in die Parkposition verfahren wird, was bevorzugt in Abhängigkeit von einem Ladezustand des elektrischen Energiespeichers und/oder zu vorbestimmten Zeitpunkten im Ladezyklus erfolgt.

8. Ladeportal nach einem der vorangegangenen Ansprüche, wobei der Engergiespeicher zur Abdeckung von Verbrauchsspitzen dient, wobei die Energieversorgungseinrichtung bevorzugt so dimensioniert ist, dass die von der Energieversorgungseinrichtung zur Verfügung gestellte Spitzenleistung unterhalb des maximalen Leistungsverbrauchs des Wagens liegt.

9. Ladeportal nach einem der vorangegangenen Ansprüche, wobei der Wagen zumindest zeitweise ausschließlich über die Energie des Energiespeichers betreibbar ist und/oder wobei der Energiespeicher auswechselbar ist, wobei das Ladeportal bevorzugt eine Wechselstation zum manuellen und/oder automatischen Auswechseln des Energiespeichers aufweist.

10. Ladeportal nach einem der vorangegangenen Ansprüche, mit einem kabellosen Datenübertragungssystem zur Kommunikation mit dem Wagen, insbesondere zur Kommunikation mit einer Steuerung und/oder mit Sensoren des Wagens, wobei das Datenübertragungssystem bevorzugt einen geschlitzten Hohlleiter aufweist, welcher sich entlang der Führungsschiene erstreckt und mit einer am Wagen angeordneten Antenne, welche bevorzugt über den Schlitz in den Hohlleiter hineingeführt ist, zusammenwirkt, und/oder wobei das Datenübertragungssystem bevorzugt lediglich zeitweise und/oder nur in einzelnen Verfahrpositionen und/oder Verfahrabschnitten eine Kommunikation mit dem Wagen erlaubt, insbesondere in einer Arbeitsposition, in welcher der Wagen über einer Bearbeitungsmaschine und/oder Zu- und/oder Abführeinrichtung stoppt, um ein Werkstück abzulegen oder aufzunehmen, und/oder einer Parkposition.

11. Ladeportal nach einem der vorangegangenen Ansprüche, wobei der Wagen eine Steuerung für den Antrieb aufweist, wobei die Steuerung des Wagens bevorzugt von einer Steuerung des Ladeportals Befehle und/oder Synchronisierungsdaten zur Ansteuerung des Antriebs erhält und/oder Zustandsdaten an eine Steuerung des Ladeportals sendet, wobei bevorzugt die Regelung des Antriebs über die Steuerung des Ladeportals oder die Steuerung des Wagens erfolgt.

12. Ladeportal nach einem der vorangegangenen Ansprüche, wobei der Wagen ein autonomes Schmiersystem mit einem Schmierstoffbehälter zur Versorgung mindestens einer mechanischen Achse und/oder mindestens eines Antriebs mit Schmierstoff aufweist.

13. Ladeportal nach einem der vorangegangenen Ansprüche, wobei der Antrieb des Wagens entlang der Führungsschiene über ein Antriebselement des Wagens erfolgt, welches mit einer Zahnstange der Führungsschiene kämmt, und/oder wobei der Wagen eine Komponente aufweist, welche zumindest auch in vertikaler Richtung bewegbar ist, wobei die Komponente bevorzugt zum Bewegen der Werkstücke in vertikaler Richtung dient und/oder einen Greifer trägt, wobei die Komponente bevorzugt eine vertikal bewegbare Linearachse und/oder einen Roboterarm mit mehreren Schwenk- und/oder Rotationsachsen aufweist.

14. Ladeportal nach einem der vorangegangenen Ansprüche, wobei es sich um ein Linearportal oder um ein Flächenportal handelt, und/oder wobei die Führungsschiene über eine oder mehrere Stützen getragen wird.

15. Ladeportal nach einem der vorangegangenen Ansprüche mit zwei oder mehr Wagen, welche entlang der selben Führungsschiene bewegbar sind.
